# EUROPEAN PATENT APPLICATION

(11) **EP 2 899 378 A1**
(43) Date of publication of application: **29.07.2015**
(21) Application number: 15151895.8
(22) Date of filing: 21.01.2015
(51) Int. Cl.: F01M 13/02, F02M 35/10

(54) **Internal combustion engine**

(30) Priority: 27.01.2014 JP 2014012226
(71) Applicant: Honda Motor Co., Ltd., Minato-ku Tokyo 107-8556 (JP)
(72) Inventor: Takeichi, Kayoko, SAITAMA, Saitama 351-0193 (JP); Mimura, Masahide, SAITAMA, Saitama 351-0193 (JP); Ochihai, Shuichi, SAITAMA, Saitama 351-0193 (JP); Kobayashi, Tomokazu, SAITAMA, Saitama 351-0193 (JP); Takahashi, Ryota, SAITAMA, Saitama 351-0193 (JP); Nakano, Yasuhiko, SAITAMA, Saitama 351-0193 (JP); Sugio, Daisuke, SAITAMA, Saitama 351-0193 (JP)
(74) Representative: Quinterno, Giuseppe

(57) **Abstract**

An internal combustion engine (E) comprises a breather chamber (40) for performing gas liquid separation of blow-by gas produced within an engine main body (21), being formed on the inside of a head cover (26) which is connected to a cylinder head (25)in such a way as to hold a gasket (48) between itself and the cylinder head (25). An outlet pipe (39) is provided in the head cover (26) so as to lead out the blow-by gas from the breather chamber (40), and a hose (41) leads the blow-by gas to an air cleaner (29) side having an end portion joined to the outlet pipe (39). The influence upon the surrounding environment is suppressed at a lower level by releasing a pressure from a predetermined part on purpose, even if an internal pressure within the engine main body (21) is increased by blow-by gas. A release device (43) is provided in the outlet pipe (39) in order for releasing blow-by gas outwardly by separating a hose (41) from the outlet pipe (39) when the pressure of the blow-by gas within an engine main body (21) is not less than a predetermined pressure.

## Description

### TECHNICAL FIELD

The present invention relates to an internal combustion engine in which a part of an engine main body comprises a cylinder block, a cylinder head connected to the cylinder block, and a head cover connected to the cylinder head on the opposite side from the cylinder block in such a way as to hold a gasket between itself and the cylinder head, and in which a breather chamber for performing gas liquid separation of blow-by gas produced within the engine main body is formed in the inside of the head cover, an outlet pipe for leading out the blow-by gas from the breather chamber is provided in the head cover, and a hose for leading the blow-by gas to an air cleaner has an end portion connected to the outlet pipe.

### BACKGROUND ART

An internal combustion engine of this type is already disclosed in Japanese Patent No. 3646066.

### DISCLOSURE OF THE INVENTION

### PROBLEM TO BE SOLVED BY THE INVENTION

By the way, as disclosed in the above-mentioned prior patent, in the construction in which the blow-by gas within the breather chamber is discharged by the outlet pipe provided in the head cover, there may be cases where, when a pipe member such as a hose and the like has been clogged for some reason, it is difficult to smoothly discharge the blow-by gas, whereby to allow an internal pressure of the engine main body to be increased. At this time, in the case where deformation such as deflection and the like is produced by the internal pressure within the engine main body, the possibility arises that a part in which a sealing characteristic of the gasket is insufficient is developed between the head cover and the cylinder head, and as a result, there is the influence that due to the increased internal pressure the blow-by gas comes out of the unexpected part which is insufficient in the sealing characteristic. Therefore, a countermeasure to prevent the influence from extending into the surrounding environment is required.

The present invention has been made in consideration of such circumstances, and has an objective of providing an internal combustion engine that can suppress the influence upon the surrounding environment at a lower level by releasing a pressure from a predetermined part on purpose, even if an internal pressure within an engine main body is increased by blow-by gas.

### MEANS FOR SOLVING THE PROBLEM

In order to achieve the above object, according to a first feature of the present invention, there is provided an internal combustion engine comprising a part of an engine main body including a cylinder block, a cylinder head connected to the cylinder block, and a head cover connected to the cylinder head on the opposite side from the cylinder block in such a way as to hold a gasket between itself and the cylinder head, wherein a breather chamber for performing gas liquid separation of blow-by gas produced within the engine main body is formed inside the head cover, an outlet pipe for leading out the blow-by gas from the breather chamber is provided in the head cover, and a hose for leading the blow-by gas to an air cleaner side has an end portion joined to the outlet pipe, and wherein a release device is provided in the outlet pipe in order for releasing the blow-by gas outwardly by separating the hose from the outlet pipe when a pressure of the blow-by gas within the engine main body is not less than a predetermined pressure.

According to a second feature of the present invention, in addition to the first feature, the engine main body is mounted on a vehicle in a condition where a cylinder axis of the engine main body is forwardly inclined, and the outlet pipe is provided in the head cover above the cylinder axis.

According to a third feature of the present invention, in addition to the first or second feature, the predetermined pressure is set up at a lower level than the pressure of the blow-by gas within the engine main body at the time the gasket loses its function. According to a fourth feature of the present invention, in addition to any one of the first to third features, the release device comprises a groove which is formed in a part of an outer circumference of the outlet pipe covered with an end portion of the hose so as to communicate with the breather chamber.

According to a fifth feature of the present invention, in addition to the fourth feature, the outlet pipe is integrally provided with a cylinder section a basal end portion of which is connected to an outer surface of the head cover and an annular expanded section which is expanded radially outwardly from a distal end portion of the cylinder section, and the groove is formed on an outer circumference of the annular expanded section.

According to a sixth feature of the present invention, in addition to the fifth feature, the groove is recessed from an outer circumference of the cylinder section.

According to a seventh feature of the present invention, in addition to any one of the first to third features, the release device comprises a cutout or a through bore which is provided in a part of an outer circumference of the outlet pipe covered with an end portion of the hose, so as to provide communication between an inner side and an outer side of the outlet pipe.

According to an eighth feature of the present invention, in addition to the first to seventh features, a clip is attached on an overlapping portion between the outlet pipe and an end portion of the hose which is connected to the outlet pipe in such way as to cover a part of the outlet pipe, wherein the clip is arranged on a closer side to the head cover than the release device.

According to a ninth feature of the present invention, in addition to any one of the first to eighth features, the head cover is made of resin.

Further, according to a tenth feature of the present invention, in addition to the ninth feature, the outlet pipe is formed integrally and continuously with the head cover.

### EFFECTS OF THE INVENTION

According to the first feature of the present invention, when the pressure of the blow-by gas within the engine main body is not less than the predetermined pressure, the hose is separated from the outlet pipe by the release device provided in the outlet pipe to thereby have the blow-by gas to be released outwardly. Therefore, even if, due to the clogging of the hose or other reason, the smooth discharge of the blow-by gas is difficult so that the internal pressure of the engine main body is increased above the predetermined pressure, the blow-by gas can be forcibly released from the outlet pipe to the outside on purpose, whereby the pressure within the engine main body can be reduced.

According to the second feature of the present invention, since the outlet pipe is provided above the forwardly inclined cylinder axis and located in the highest position of the engine main body, the effective gas liquid separation can be performed. Even in the case where the blow-by gas is forcibly discharged from the outlet pipe to the outside by the release device, the outward leakage of oil or the like can be prevented effectively and it is possible to suppress the influence upon the surrounding environment at a lower level

According to the third feature of the present invention, the release device is configured to release the blow-by gas to the outside by separating the hose from the outlet pipe, before the gasket between the cylinder head and the head cover loses its function due to the increase in pressure within the engine main body. Therefore, it is possible to prevent the blow-by gas from coming out of the unexpected part which is poor in the sealing characteristic.

According to the fourth feature of the present invention, since the groove is formed in a part of the outer circumference of the outlet pipe covered with the end portion of the hose, the release device can be easily formed, and the hose can be expanded so as to be separated from the outlet pipe by allowing the pressure of the blow-by gas introduced into the groove to effectively act on an inner circumference of the hose.

According to the fifth feature of the present invention, the outlet pipe is integrally provided with the cylinder section and the annular expanded section which is expanded radially outwardly from the distal end portion of the cylinder section, and the groove is formed on the outer circumference of the annular expanded section. Therefore, the interference of the connecting portion of the hose is ensured by the annular expanded section, so that it is possible to restrain decrease in rigidity of the outlet pipe by formation of the groove.

According to the sixth feature of the present invention, since the groove is recessed from the outer circumference of the cylinder section, the blow-by gas can be easily introduced between the hose and the outlet pipe.

According to the seventh feature of the present invention, since the cutout or the through bore is provided in a part of the outer circumference of the outlet pipe covered with the end portion of the hose, the release device can be easily formed, and the hose can be expanded so as to be separated from the outlet pipe by allowing the pressure of the blow-by gas introduced into the groove to effectively act on an inner circumference of the hose.

According to the eighth feature of the present invention, the clip is attached on the overlapping portion between the outlet pipe and the end portion of the hose on the closer side to the head pipe than the release device. Therefore, when the end of the hose is fixed on the outlet pipe by the clip, the function of the release device can be ensured in a condition where the clip does not interfere with the release device.

According to the ninth feature of the present invention, since the head cover is made of resin, the head cover and the engine main body can be lightened.

Further, according to the tenth feature of the present invention, since the outlet pipe is formed integrally and continuously with the head cover, the formation of the release device can be facilitated.

### BRIEF DESCRIPTION OF THE DRAWINGS

Fig. 1 is a left side view of a two-wheeled motorcycle in accordance with a first embodiment of the present invention;
Fig. 2 is a view of a part of an internal combustion engine taken in the direction of an arrow 2 of Fig. 1;
Fig. 3 is a view taken in the direction of an arrow 3 of Fig. 2;
Fig. 4 is a cross sectional view of a head cover and a cylinder head taken along line 4-4 of Fig. 3;
Fig. 5 is a cross sectional view taken along line 5-5 of Fig. 4;
Fig. 6 is a view taken in the direction of an arrow 6 of Fig. 3;
Fig. 7 is a cross sectional view taken along line 7-7 of Fig. 6;
Fig. 8 is an enlarged view taken in the direction of an arrow 8 of Fig. 4;
Fig. 9 is a cross sectional view corresponding to Fig. 8 in a condition where a gasket is deformed;
Fig. 10 is a view corresponding to Fig. 6 in accordance with a second embodiment;

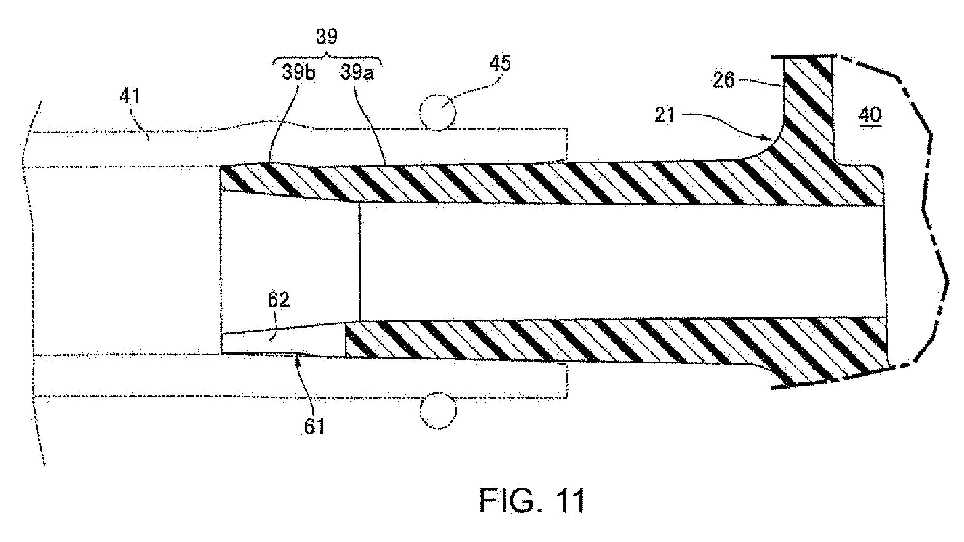

Fig. 11 is a cross sectional view taken along line 11-11 of Fig. 10;
Fig. 12 is a view corresponding to Fig. 6 in accordance with a third embodiment; and
Fig. 13 is a cross sectional view taken along line 13-13 of Fig. 12.

### BEST MODE FOR CARRYING OUT THE INVENTION

Embodiments of the present invention will be described hereunder with reference to accompanying drawings. In the following description, the orientation such as front, rear, left and right shall be referred to in the direction as viewed from a rider riding on a two-wheeled motorcycle.

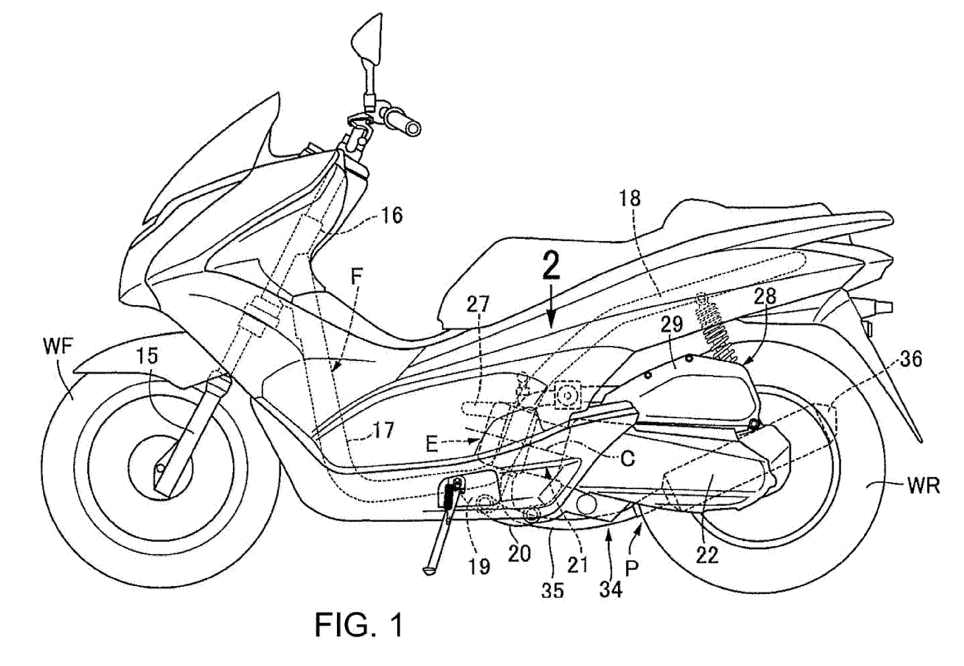

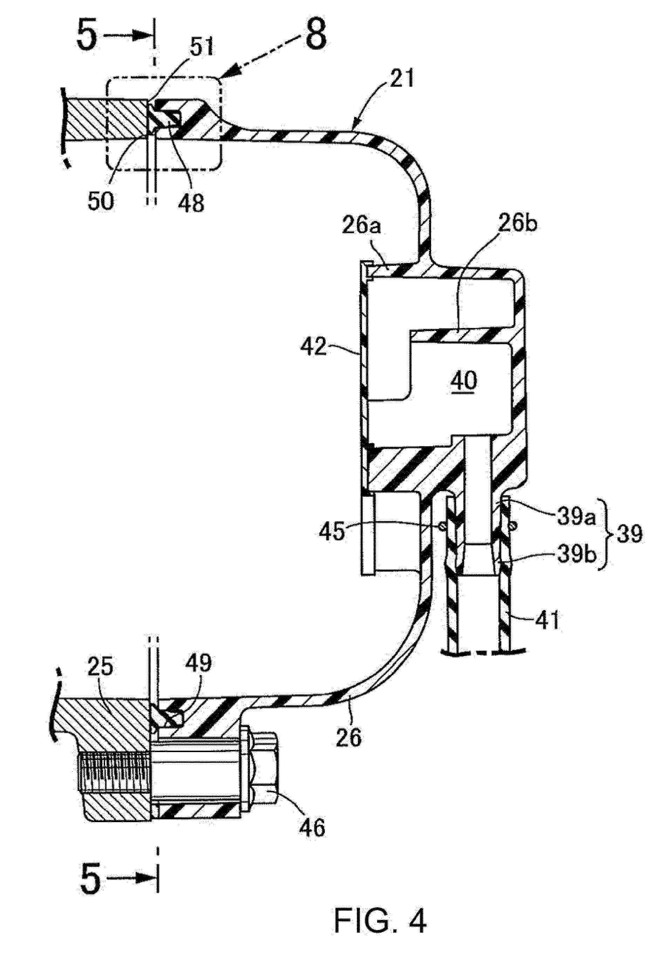

The first embodiment of the present invention will be explained with reference to Figs. 1 to 9. Referring first to Fig. 1, a vehicle body frame F of the motorcycle of a straddle type vehicle includes a front fork 15 pivotally supporting a front wheel WF, a head pipe 16 supporting the front fork 15 in steerable fashion, a pair of left and right main frames 17 extending rearwardly downward from the head pipe 16, and a pair of left and right rear frames 18 connected to rear end portions of these main frames 17 and extending rearwardly in an upward direction. A bracket 19 is provided in lower portions of rear ends of the main frames 17. A front part of a power unit P which produces motive power for driving a rear wheel WR is supported through a link device 20 on the bracket 19 in an upwardly and downwardly swingable fashion.

The power unit P includes an internal combustion engine E and a transmission device (not shown) provided between the internal combustion engine E and the rear wheel WR. The transmission device is accommodated in a transmission case 22 which is connected to an engine main body 21 of the internal combustion engine E and extends to a left lateral side of the rear wheel WR. The rear wheel WR is pivotally supported on a rear end portion of the transmission case 22.

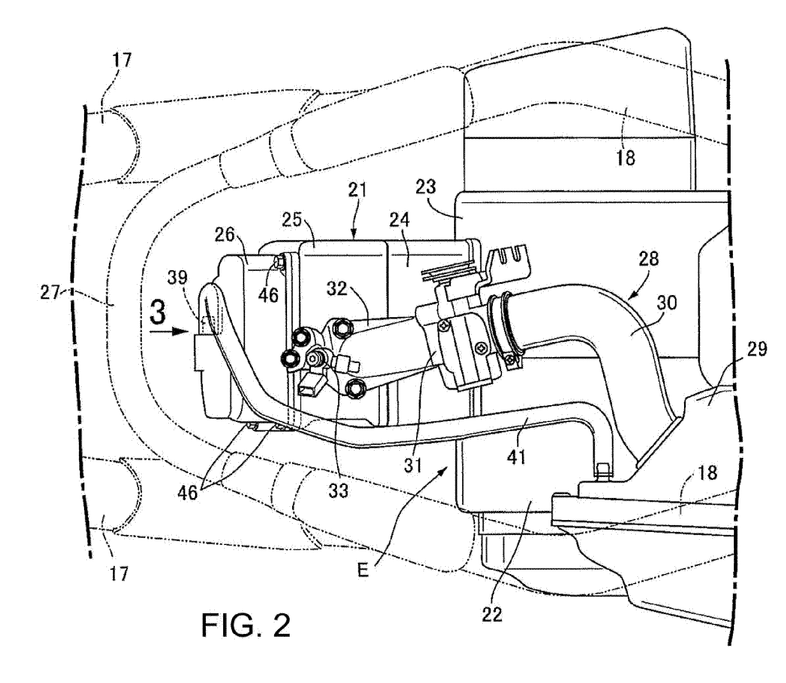

Referring to Fig. 2 together, the engine main body 21 includes a crank case 23, a cylinder block 24 connected to a front portion of the crank case 23, a cylinder head 25 connected to a front portion of the crank case 23, a cylinder head 25 connected to a front end of the cylinder block 24, and a head cover 26 connected to the cylinder head 25 on the opposite side from the cylinder block 24. The transmission case 22 is connected to the crank case 23.

This engine main body 21, as shown in Fig. 1, is mounted on the motorcycle, with a cylinder axis C forwardly inclined so as to extend substantially horizontally. A cross member 27 which forms a part of the vehicle body frame F and which is curved in such a way as to veer forwardly is provided between the pair of left and right rear frames 18 in a state of covering a front part of the engine main body 21 from the forward and obliquely upward direction.

An intake system 28 is connected to an upper lateral surface of the cylinder head 25. This intake system 28 includes an air cleaner 29 which is supported by the transmission case 22 and arranged above the transmission case 22, a connecting tube 30 an upstream end portion of which is joined to the air cleaner 19, a throttle body 31 which is joined to a downstream end portion of the connecting tube 30, and an intake pipe 32 which is provided between the cylinder head 25 and the throttle body 31. A fuel injection valve 33 is attached to the intake pipe 32.

Further, an exhaust system 34 is connected to a lower lateral surface of the cylinder head 25. This exhaust system 34 includes an exhaust pipe 35 which extends from the lower lateral surface of the cylinder head 25 to a right side of the rear wheel WR while passing through the lower side of the transmission case 22, and an exhaust muffler 36 which is joined to a downstream end portion of the exhaust pipe 35 and located on the right side of the rear wheel WR.

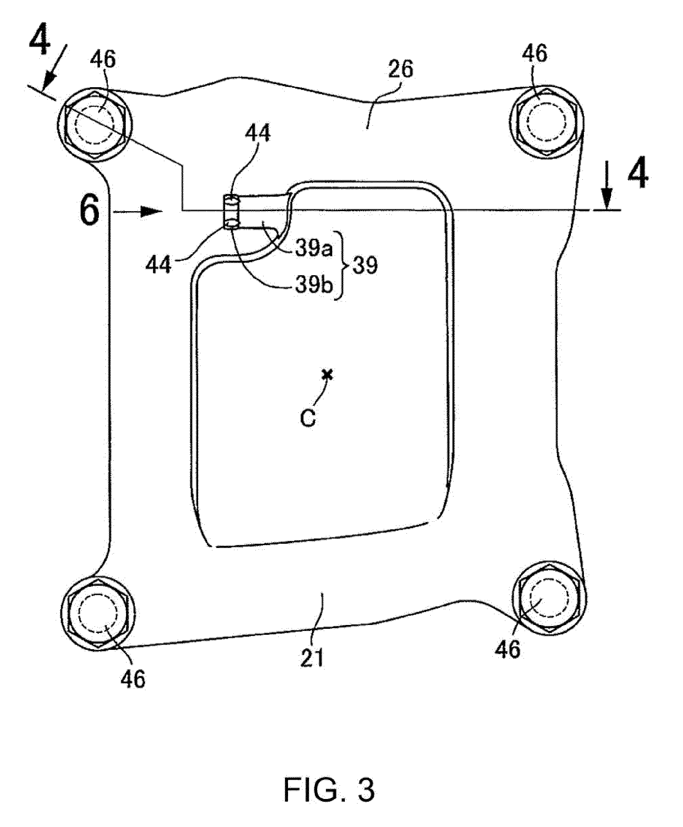

Referring to Figs. 3 to 5 together, a breather chamber 40 for performing gas liquid separation of the blow-by gas produced within the engine main body 21 is formed on the inside of the head cover 26. In the head cover 26 there is provided an outlet pipe 39 for leading out the blow-by gas form the breather chamber 40. An end of a hose 41 for introducing the blow-by gas to the air cleaner 29 side is joined to the outlet pipe 39.

By the way, the head cover 26 is made of resin and the outlet pipe 39 is made also of resin. The breather chamber 40 is formed between the head cover 26 and a resin cover plate 42 welded to the head cover 26. Projecting integrally from an inner surface of the head cover 26 are a contour wall portion 26a which is configured to form an outer contour of the breather chamber 40, and labyrinth wall portions 26b which are arranged in multiple locations of a part surrounded by the contour wall portion 26a in such a way as to form a labyrinth passage in the breather chamber 40. The cover plate 42 is welded to the contour wall portion 26a and the labyrinth wall portions 26b.

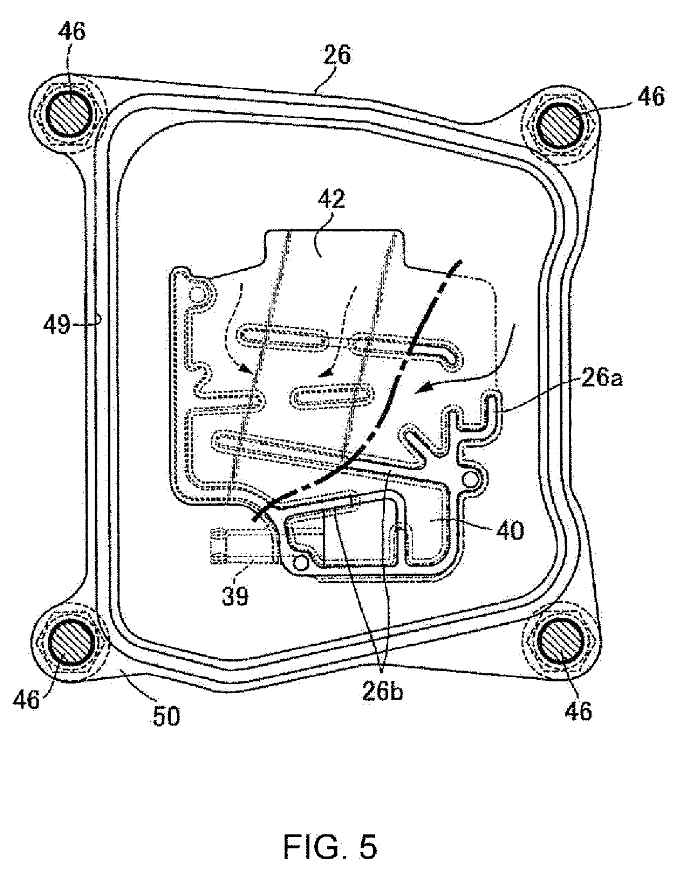

The blow-by gas is introduced into the breather chamber 40 as indicated by arrows in Fig. 5. The blow-by gas after the gas liquid separation has been performed while passing through the labyrinth passage within the breather chamber 40 is led out of the outlet pipe 39. The outlet pipe 39 is integrally formed with the head cover 26 in such a way as to be arranged above the cylinder axis C in communication with the breather chamber 40.

Further, also in order to prevent the outlet pipe 39 and the hose 41 from projecting upwardly by the upward and downward swinging motion of the power unit P, the outlet pipe 39 is integrally formed with the head cover 26 such that it faces to one of the vehicle width direction (to the right in this embodiment) in a condition where the engine main body 21 is loaded on the motorcycle.

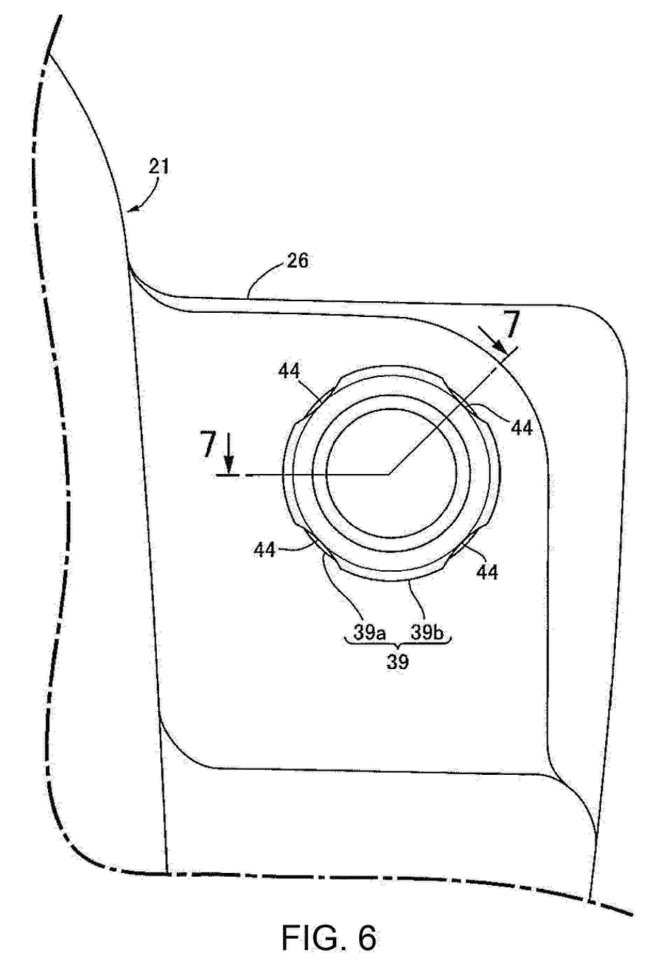

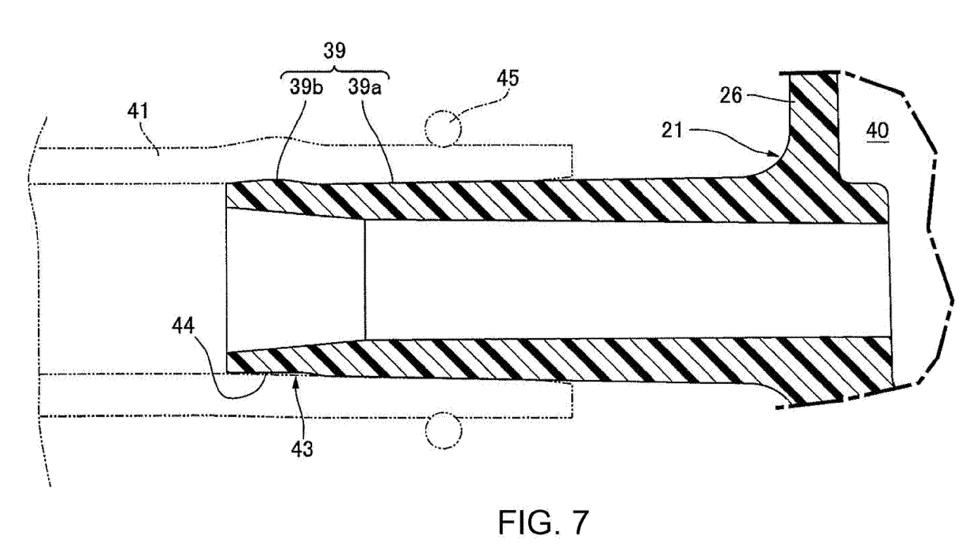

Referring to Figs. 6 and 7 together, in the outlet pipe 39 there is provided a release device 43 which is configured to release the blow-by gas outwardly by separating the hose 41 from the outlet pipe 39 when the pressure of the blow-by gas within the engine main body 21 is not less than a predetermined pressure. In this embodiment, the release device 43 includes a groove 44 which is formed in a part of an outer circumference of the outlet pipe 39 covered with an end portion of the hose 41 in such a way as to communicate with the breather chamber 40. The groove 44 is formed in an outer circumference of the outlet pipe 39, for example, in four places at regular intervals in the circumferential direction.

The outlet pipe 39 is integrally provided with a cylinder section 39 a basal end portion of which is connected to an outer surface of the head cover 26 and an annular expanded section 39b which is expanded radially outwardly from a distal end portion of the cylinder section 39a. The groove 44 is formed on an outer circumference of the annular expanded section 39b. In addition, the groove 44 is recessed inwardly from an outer circumference of the cylinder section 39a.

Further, a clip 45 which is arranged on a closer side to the head cover 26 than the release device 43 is attached on an overlapping portion between the outlet pipe 39 and an end portion of the hose 41 which is connected to the outlet pipe 39 in a state of covering a part of the outlet pipe 39. In this embodiment, the clip 45 is attached on the overlapping portion between the outlet pipe 39 and the end portion of the hose 41 in a part corresponding to the cylinder section 39a of the outlet pipe 39.

By the way, the head cover 26 is connected to the cylinder head 25 by multiple bolts, for example, four bolts 4. Although a gasket 48 is held between the cylinder head 25 and the head cover 26 as clearly shown in Fig. 3, the predetermined pressure at which the release device 43 releases the blow-by gas outwardly by separating the hose 41 from the outlet pipe 39 is set up at a lower level than the pressure of the blow-by gas within the engine main body 21 at the time the gasket 48 loses its function. A seal keeping critical pressure of the gasket 48 is 240kPa for example, whereas the predetermined pressure is 170kPa for example.

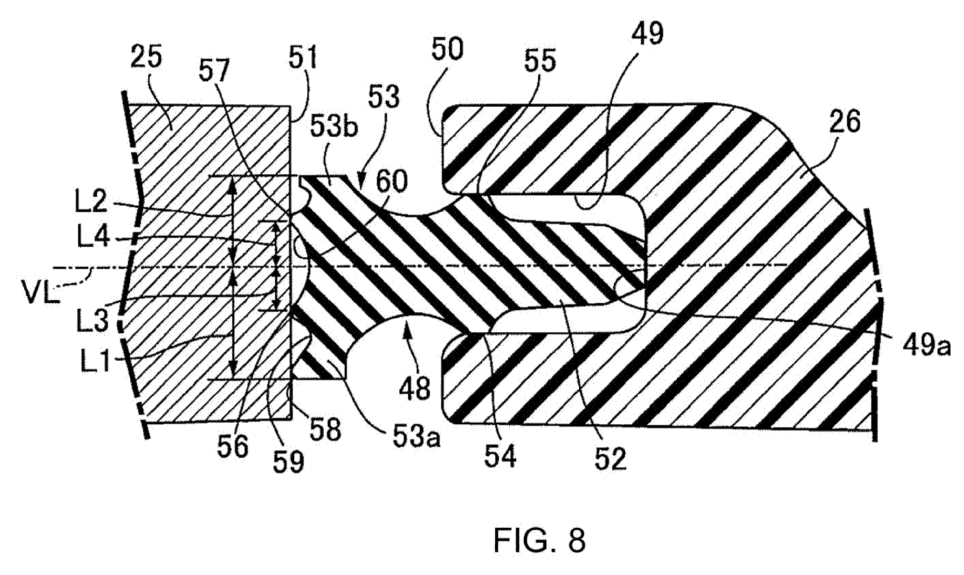

In Fig. 8, the gasket 48 is located between a first connecting surface 50 which is formed in the head cover 26 in opposition to the cylinder head 25 and a second connecting surface 51 which is formed in the cylinder head 25 in opposition to the first connecting surface 50. The gasket 48 is held between the cylinder head 25 and the head cover 26 in such a manner that it is fitted in a fitting groove 49 formed in the first connecting surface 50 serving as one of the first and second connecting surfaces 50, 51 and makes sealing contact with the second connecting surface 51 serving as the other of the first and second connecting surfaces 50, 51. The fitting groove 49 is formed continuously in endless fashion around a full circumference of the head cover 26. Herein, Fig. 8 shows a condition where the gasket 48 is not compressed in the direction to be squeezed by the cylinder head 25 and the head cover 26, in order to make a shape of the gasket 48 clear.

The gasket 48 is integrally provided with a fitting section 52 to be fitted in the fitting groove 49 in such a manner that an end portion of the fitting section 52 comes in contact with a closed end wall 49a of the fitting groove 49, and a flange section 53 which is continuous with the other end portion of the fitting section 52 and makes sealing contact with the second connecting surface 51.

The fitting section 52 is formed in an annular shape so as to be fitted in the fitting groove 49. On inner and outer circumferences of the fitting section 52 there are integrally formed buckling preventing projections 54, 55 in projecting fashion.

Further, the flange section 53 is composed of an inner flange portion 53a which passes through a center in the width direction of the fitting section 52 and which extends from a phantom line VL which extends in parallel with the squeezing direction of the gasket 48, to inward sides of the cylinder head 25 and the head cover 26, and an outer flange portion 53b which extends from the phantom line VL to outward sides of the cylinder head 25 and the head cover 26. An extension length L1 of the inner flange portion 53a from the phantom line VL is set up larger than an extension length L2 of the outer flange portion 53b from the phantom line VL.

Further, in the inner flange portion 53a there is provided a first inner sealing projection 56 projecting toward the second connecting surface 51. In the outer flange portion 53b there is provided an outer sealing projection 57 projecting toward the second connecting surface 51. A distance L3 between the phantom line VL and the first inner sealing projection 56 is set up substantially equal to a distance L4 between the phantom line VL and the outer sealing projection 57. A distance from the first sealing projection 56 to a distal end of the inner flange portion 53a is set up larger than a distance from the outer sealing projection 57 to a distal end of the outer flange portion 53b.

Further, in the distal end portion of the inner flange portion 53a there is provided a second sealing projection 58 which projects toward the second connecting surface 51. Between the first inner sealing projection 56 and the second sealing projection 58 of the inner flange portion 53a there is formed a concave portion 59 which is recessed in the direction separated apart from the second connecting surface 51. In addition, the concave portion 59 is configured such that it is separated from the second connecting surface 51 even if the gasket 48 is compressed in the squeezing direction by tightening the bolts 46.

Moreover, the concave portion 59 is recessed deeper than a central concave portion 60 which is formed in the flange section 53 between the first inner sealing projection 56 and the outer sealing projection 57.

Further, the distal end portion of the inner flange portion 53a is located outwardly of the inner wall surfaces of the cylinder head 25 and the head cover 26 in a condition where the gasket 48 is held between the cylinder head 25 and the head cover 26 (including a condition of Fig. 8 and a condition where the gasket 48 is compressed in the squeezing direction by tightening the bolts 46).

Next, the operation of the first embodiment will be described hereunder. The breather chamber 40 for performing the gas liquid separation of the blow-by gas produced within the engine main body 21 is formed on the inside of the head cover 26. The outlet pipe 39 is provided in the head cover 26 so as to lead out the blow-by gas from the breather chamber 40. One end portion of the hose 41 which leads the blow-by gas to the air cleaner 29 side is connected to the outlet pipe 39. The release device 43 is provided in the outlet pipe 39 in order for releasing the blow-by gas to the outside by separating the hose 41 from the outlet pipe 39 when the pressure of the blow-by gas within the engine main body 21 is not less than the predetermined pressure. With this construction, even if, due to the clogging of the hose or other reason, the smooth discharge of the blow-by gas is difficult so that the internal pressure of the engine main body 21 is increased above the predetermined pressure, the blow-by gas can be forcibly released from the outlet pipe 39 to the outside on purpose. In addition, since the blow-by gas after the gas liquid separation has been performed while passing through the breather chamber 40 is led out of the outlet pipe 39, the outward leakage of oil or the like can be prevented effectively and the influence upon the surrounding environment can be suppressed at a lower level.

Further, the engine main body 21 is mounted on the vehicle in a condition where the cylinder axis C of the engine main body 21 is forwardly inclined. The outlet pipe 39 is provided above the cylinder axis C in the head cover 26. Therefore, the gas liquid separation can be performed effectively. Even in the case where the blow-by gas is forcibly discharged from the outlet pipe 39 to the outside by the release device, the outward leakage of oil or the like can be prevented effectively and the influence upon the surrounding environment can be suppressed at a lower level.

Further, the predetermined pressure at which the release device 43 works in such a way as to forcibly release the blow-by gas from the outlet pipe 39 to the outside on purpose is set up at a lower level than the pressure of the blow-by gas within the engine main body 21 at the time the gasket 48 is held between the cylinder head 25 and the head cover 26 loses its function. Therefore, the release device 43 release the blow-by gas to the outside by separating the hose 41 from the outlet pipe 39, before the gasket 48 loses its function due to the increase in pressure within the engine main body 21, whereby it is possible to prevent the blow-by gas from coming out of the unexpected part which is poor in the sealing characteristic.

Further, the release device 43 includes the groove 44 which is in communication with the inside of the breather chamber 40 and which is formed in a part of the outer circumference of the outlet pipe 39 covered with the end portion of the hose 41. Therefore, the release device 43 can be easily formed, and the hose 41 can be expanded so as to be separated from the outlet pipe 39 by allowing the pressure of the blow-by gas introduced into the groove 44 to effectively act on the inner circumference of the hose 41.

Further, the outlet pipe 39 is integrally provided with the cylinder section 39a the basal end portion of which is connected to the outer surface of the head cover 26 and the annular expanded section 39b which is expanded radially outwardly from the distal end portion of the cylinder section 39a, and the groove 44 is formed on the outer circumference of the annular expanded section 39b. Therefore, the interference of the connecting portion of the hose 41 is ensured by the annular expanded section 39b, so that it is possible to restrain the decrease in the rigidity of the outlet pipe 39 by formation of the groove 44. In addition, since the groove 44 is recessed from the outer circumference of the cylinder section 39a, the blow-be gas can be easily introduced between the hose 41 and the outlet pipe 39.

Further, the clip 45 which is arranged on the closer side to the head cover 26 than the release device 43 is attached on the overlapping portion between the outlet pipe 39 and the end portion of the hose 41 which is connected to the outlet pipe 39 in a state of covering a part of the outlet pipe 39. Therefore, in the case where the end of the hose 41 is fixed on the outlet pipe 39 by the clip 45, the function of the release device 43 can be ensured in a condition where the clip 45 does not interfere with the release device 43.

Further, the head cover has the first connecting surface 50, and the cylinder head 25 has the second connecting surface 51. The gasket 48 is fitted in the fitting groove 49 formed in the first connecting surface 50 and held between the cylinder head 25 and the head cover 26. This gasket 48 is integrally comprised of the fitting section 52 to be fitted in the fitting groove 49 in such a manner that one end portion of the fitting section 52 comes in contact with the closed end wall 49a of the fitting groove 49, and the flange section 53 which has the inner flange portion 53a and the outer flange portion 53b and which is connected continuously with the other end portion of the fitting section 52 and makes sealing contact with the second connecting surface 51. The inner flange portion 53a passes through the center in the width direction of the fitting section 52 and extends from the phantom line VL which extends in parallel with the squeezing direction of the gasket 48, to the inward sides of the cylinder head 25 and the head cover 26, and the outer flange portion 53b extends from the phantom line VL to the outward sides of the cylinder head 25 and the head cover 26. The extension length L1 of the inner flange portion 53a from the phantom line VL is set up larger than the extension length L2 of the outer flange portion 53b from the phantom line VL. With this construction, when the pressure within the engine main body 21 is increased at the undesired level so that the force in the outwardly pushing direction acts on the gasket 48, the inner flange portion 53a comes in close contact with the second connecting surface 51 whereby the sealing characteristic can be maintained effectively. Namely, since the closely contacting surface of the gasket 48 relative to the second connecting surface 51 is able to be enlarged, the sealing characteristic can be ensured and maintained even in the case where the head cover 26 and the gasket 48 is subject to deformation due to the internal pressure, the passage of time or the like, and the pressure tightness of the gasket 48 can be increased.

Further, the first inner sealing projection 56 projecting toward the second connecting surface 51 is provided in the inner flange portion 53a. The outer sealing projection 57 projecting toward the second connecting surface 51 is provided in the outer flange portion 53b. The distances L3, L4 between the phantom line VL and each of the first inner sealing projection 56 and the outer sealing section are set up substantially equally in a condition where the distance from the first sealing projection 56 to the distal end of the inner flange portion 53a is larger than the distance from the outer sealing projection 57 to the distal end of the outer flange portion 53b. Therefore, when the gasket 48 is held normally between the cylinder head 25 and the head cover 26, the even sealing characteristic on the inside and outside of the fitting section 52 is ensured by the first inner sealing projection 56 and the outer sealing projection 57 whereby it is possible to seal at a high surface pressure.

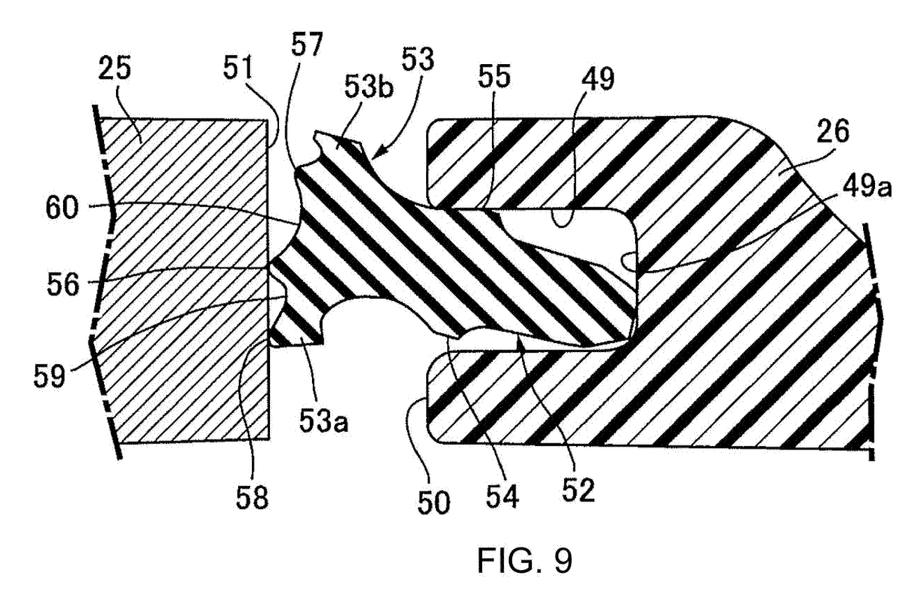

On the other hand, as shown in Fig. 9, when the internal pressure within the engine main body 21 is increased undesiredly so that the force in the outwardly pushing direction acts on the gasket 48, a comparatively long part from the first inner sealing projection 56 to the distal end of the inner flange portion 53a comes into close contact with the second connecting surface 51 thereby making it possible to ensure the sealing characteristic. Further, the second sealing projection 58 which projects toward the second connecting surface 51 is provided in the distal end portion of the inner flange portion 53a. The concave portion 59 which is recessed in the direction separated apart from the second connecting surface 51 is formed between the first inner sealing projection 56 and the second sealing projection 58 of the inner flange portion 53a. Therefore, as shown in Fig. 9, when the internal pressure within the engine main body 21 is increased undesiredly so that the force in the outwardly pushing direction acts on the gasket 48 thereby allowing the gasket 48 to be deformed outwardly, the inner flange portion 53a is able to be bent flexibly due to the formation of the concave portion 59, so that the second inner sealing projection 58 can be easy to make sealing contact with the second connecting surface 51. In addition, a contact area of the inner flange portion 53a relative to the second connecting surface 51 is decreased so as to heighten the surface pressure whereby the sealing characteristic can be maintained in good condition.

Moreover, the concave portion 59 is recessed deeper than the central concave portion 60 which is formed in the flange section 53 between the first inner sealing projection 56 and the outer sealing projection 57. Therefore, the distal end part of the inner flange portion 53a is able to be bent more flexibly, so that the second inner sealing projection 58 easily makes closer contact with the second connecting surface 51. In addition, the space is easily formed between the first and second sealing projections 56, 58 in a condition where the gasket 48 is deformed outwardly, so that the contact area of the inner flange portion 53a relative to the second connecting surface 51 is decreased so as to heighten the surface pressure whereby the sealing characteristic can be maintained in good condition.

Further, the distal end portion of the inner flange portion 53a is located on the outside of the inner wall surfaces of the cylinder head 25 and the head cover 26 in a condition where the gasket 48 is held between the cylinder head 25 and the head cover 26. Therefore, the gasket 48 is not allowed to interfere with a valve gear system or the like within the engine main body 21, and there is no influence on the oil flow flowing along the inner wall surfaces of the head cover 25 and the cylinder head 26.

Further, since the head cover 26 is made of resin, the head cover 26 and the engine main body 21can be lightened, and the sealing characteristic of the gasket 48 can be maintained effectively against the influence of deformation or the like of the resonated head cover 26. In addition, since the outlet pipe 39 is formed integrally and continuously with the head cover 26, the formation of the release device 43 can be facilitated.

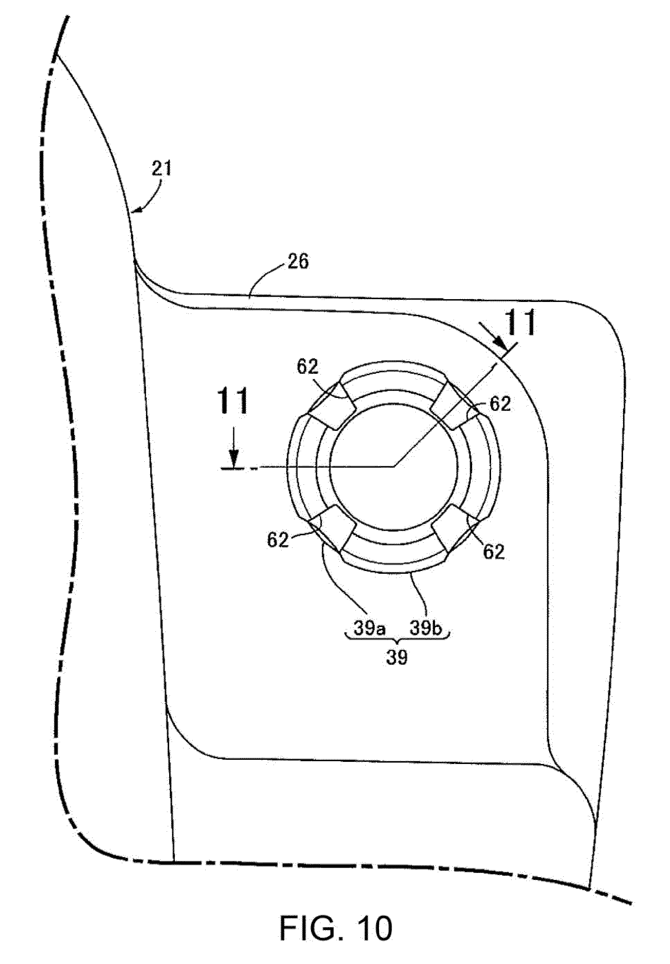

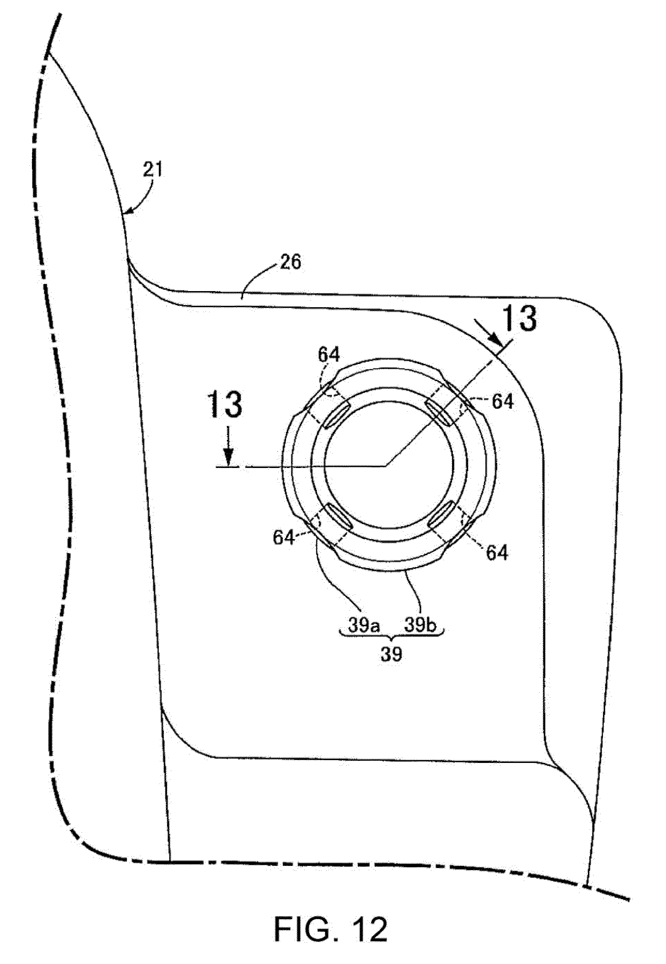

The second embodiment of the present invention will be described with reference to Figs. 10 and 12. While in the outlet pipe 39 which is formed integrally and continuously with the head cover 26 forming a part of the engine main body 21 there is provided a release device 61 which is configured to release the blow-by gas to the outside by separating the hose 41 from the outlet pipe 39 when the pressure of the blow-by gas within the engine main body 21 is not less than the predetermined pressure, the release device 61 in this embodiment includes a cutout 62 which is provided in a part of the outlet pipe 39 covered with one end portion of the hose 41 so as to provide communication between the inner side and the outer side of the outlet pipe 39. The cutout 62 is formed in the outlet pipe 39, for example, in four places at regular intervals in the circumferential direction.

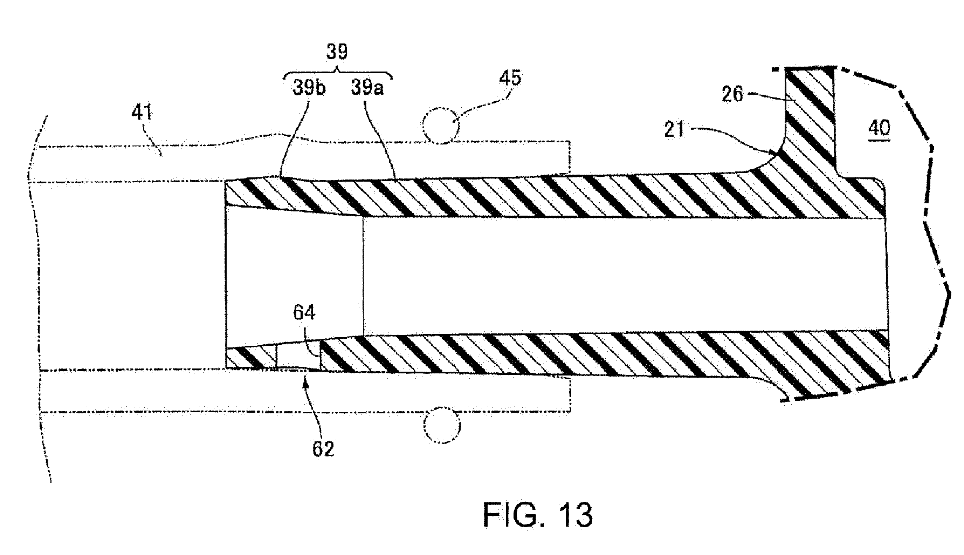

The third embodiment of the present invention will be described with reference to Figs. 12 and 13. In the outlet pipe 39 which is formed integrally and continuously with the head cover 26 forming a part of the engine main body 21 there is provided a release device 63 which is configured to release the blow-by gas to the outside by separating the hose 41 from the outlet pipe 39 when the pressure of the blow-by gas within the engine main body 21 is not less than the predetermined pressure. In this embodiment, the release device 63 includes a through bore 64 which is provided in a part of the outlet pipe 39 covered with one end portion of the hose 41 so as to provide communication between the inner side and the outer side of the outlet pipe 39. The through bore 64 is formed in the outlet pipe 39, for example, in four places at regular intervals in the circumferential direction.

The effects similar to the first embodiment can be obtained also by the second and third embodiments. However, since, in the release device 43 according to the first embodiment, the force which allows the hose 41to be separated from the outlet pipe 39 acts on the hose 41 more effectively, it may be put into practice more advantageously.

While there has been described the embodiments of the present invention, it is to be understood that the invention is not limited to the above embodiments, and various changes and modifications in design may be made in the invention without departing from the spirit and scope of the following claims.

### MAIN REFERENCE CHARACTERS

- 21:: Engine main body
- 24:: Cylinder block
- 25:: Cylinder head
- 26:: Head cover
- 39:: Outlet pipe
- 39a:: Cylinder section
- 39b:: Annular enlarged section
- 40:: Breather chamber
- 41:: Hose
- 43, 61, 63:: Release device
- 44:: Groove
- 45:: Clip
- 48:: Gasket
- 62:: Cutout
- 64:: Through bore
- C:: Cylinder axis

## Claims

1. An internal combustion engine comprising a part of an engine main body (21) including a cylinder block (24), a cylinder head (25) connected to the cylinder block (24), and a head cover (26) connected to the cylinder head (25) on the opposite side from the cylinder block (24) in such a way as to hold a gasket (48) between itself and the cylinder head (25), wherein a breather chamber (40) for performing gas liquid separation of blow-by gas produced within the engine main body (21) is formed inside the head cover (26), an outlet pipe (39) for leading out the blow-by gas from the breather chamber (40) is provided in the head cover (26), and a hose (41) for leading the blow-by gas to an air cleaner (29) side has an end portion joined to the outlet pipe (39), and wherein a release device (43, 61, 63) is provided in the outlet pipe (39) in order for releasing the blow-by gas outwardly by separating the hose (41) from the outlet pipe (39) when a pressure of the blow-by gas within the engine main body (21) is not less than a predetermined pressure.

2. An internal combustion engine according to claim 1, wherein the engine main body (21) is mounted on a vehicle in a condition where a cylinder axis (C) of the engine main body (21) is forwardly inclined, and the outlet pipe (39) is provided in the head cover (26) above the cylinder axis (C).

3. An internal combustion engine according to claim 1 or 2, wherein the predetermined pressure is set up at a lower level than the pressure of the blow-by gas within the engine main body (21) at the time the gasket (48) loses its function.

4. An internal combustion engine according to any one of claims 1 through 3, wherein the release device (43) comprises a groove (44) which is formed in a part of an outer circumference of the outlet pipe (39) covered with an end portion of the hose (41) so as to communicate with the breather chamber (40).

5. An internal combustion engine according to claim 4, wherein the outlet pipe (39) is integrally provided with a cylinder section (39a) a basal end portion of which is connected to an outer surface of the head cover (26) and an annular expanded section (39b) which is expanded radially outwardly from a distal end portion of the cylinder section (39a), and the groove (44) is formed on an outer circumference of the annular expanded section (39b).

6. An internal combustion engine according to claim 5, wherein the groove (44) is recessed from an outer circumference of the cylinder section (39a).

7. An internal combustion engine according to any one of claims 1 through 3, wherein the release device (61, 63) comprises a cutout (62) or a through bore (64) which is provided in a part of an outer circumference of the outlet pipe (39) covered with an end portion of the hose (41) so as to provide communication between an inner side and an outer side of the outlet pipe (39).

8. An internal combustion engine according to any one of claims 1 through 7, further comprising a clip (45) being attached on an overlapping portion between the outlet pipe (39) and an end portion of the hose (41) which is connected to the outlet pipe (39) in such way as to cover a part of the outlet pipe (39), wherein the clip (45) is arranged on a closer side to the head cover (26) than the release device (43).

9. An internal combustion engine according to any one of claims 1 through 8, wherein the head cover (26) is made of resin.

10. An internal combustion engine according to claim 9, wherein the outlet pipe (39) is formed integrally and continuously with the head cover (26).
